# FASCICULE DE BREVET EUROPEEN

(11) **EP 3 490 688 B1**
(45) Date de publication et mention de la délivrance du brevet: **26.08.2020**
(21) Numéro de dépôt: 17751817.2
(22) Date de dépôt: 26.07.2017
(51) Int. Cl.: A63B 71/12, A01K 13/00

(54) **EQUIPEMENT DE PROTECTION INDIVIDUELLE THERMOPLASTIQUE**
THERMOPLASTISCHE PERSÖNLICHE SCHUTZAUSRÜSTUNG
THERMOPLASTIC PERSONAL PROTECTION EQUIPMENT

(30) Priorité: 28.07.2016 FR 1657292
(43) Date de publication de la demande: 05.06.2019
(73) Titulaire: Virtus, 01800 Saint-Jean De-Niost (FR)
(72) Inventeur: RAT, Mathieu Patrick, 01800 Saint-Jean-De-Niost (FR); NIEDDU, Thibault François, 69002 Lyon (FR)
(74) Mandataire: Cabinet Beau de Loménie
(86) Numéro de dépôt international: PCT/FR2017/052088
(87) Numéro de publication internationale: WO 2018/020157

(56) Documents cités:
- WO-A2-2012/037529
- DE-A1- 4 120 135
- JP-A- H09 302 507
- US-A- 6 134 720

## Description

L'invention concerne un équipement de protection individuelle destiné à protéger un membre d'un individu, être humain ou animal.

L'invention sera plus particulièrement décrite dans le cadre d'un équipement de protection individuelle destiné à protéger une jambe d'un individu. Dans une application préférée, cet équipement de protection individuelle est destiné à protéger l'individu dans le cadre de la pratique d'une activité sportive.

Selon une application préférentielle, l'invention concerne un protège tibia pour un être humain. Selon une autre application préférentielle, l'invention concerne un équipement de protection individuelle pour protéger l'os canon ou une phalange d'un membre antérieur ou postérieur d'un animal, notamment un cheval.

Il existe de nombreuses activités dans lesquelles il est utile de préserver, au moins dans une certaine mesure, au moins une partie des membres d'un individu contre des chocs qui, en l'absence de toute protection, pourraient créer des blessures aux tissus du membre, notamment la peau et les muscles, ou à l'os sous-jacent de ce membre.

Dans le domaine des activités sportives humaines, on connaît par exemple les protège-tibias utilisés notamment dans le football, le ski, le vélo tout-terrain, le patin à roulettes, ou le motocross. Dans certains de ces sports, des protections sont aussi parfois utilisées pour protéger les coudes ou les avant-bras de l'individu.

Dans tous les cas, ces équipements de protection individuelle doivent être portés par l'individu et doivent donc être, dans la mesure du possible, adaptés à sa morphologie, tout en assurant leur fonction première qui est la protection contre les chocs.

Le document WO-01/12109 décrit un protège-tibia qui peut être conformé à la forme du tibia de l'utilisateur. Ce protège-tibia comporte une plaque principale dont le matériau est initialement flexible et il peut ainsi être conformé à la forme du tibia par l'utilisateur lui-même. Au contact de l'air, notamment par réaction avec l'humidité contenue dans l'air, le matériau subit une réaction chimique par lequel il se rigidifie de manière irréversible.

Le document WO-2012/037529 décrit notamment un protège-tibia qui lui aussi peut être conformé à la forme du tibia de l'utilisateur. Ce protège tibia comporte un noyau en matériau thermoplastique qui peut être conformé à la forme du tibia, mais qui est recouvert, sur ses deux faces interne et externe, par une structure rigide qui est par exemple réalisée sous la forme d'un tissu de fibres de verre, d'aramide, ou de carbone, noyé dans une résine, par exemple une résine époxy. Cette structure rigide n'est donc pas thermoformable. On comprend de ce document que le noyau en matériau thermoplastique est destiné à prendre l'empreinte de la forme anatomique du membre à protéger, et que cette forme est utilisée pour conformer les structures rigides assemblées sur les faces interne et externe du noyau. On comprend donc que, même si la prise de forme du noyau peut être réalisée plusieurs fois, l'équipement de protection une fois équipé de ses structures rigides ne peut plus être reformé.

L'invention vise donc à fournir un équipement de protection individuelle destiné à protéger le membre d'un individu, humain ou animal, qui puisse être conformé, éventuellement plusieurs fois, sans nécessiter d'outillage ou d'équipements spécifiques.

Pour ce faire, l'invention propose un équipement de protection individuelle destiné à protéger un membre d'un individu, du type comportant :
- une plaque principale de matériau polymère thermoplastique ayant deux faces opposées, respectivement externe et interne ;
- une première couche externe accolée à la face externe de la plaque principale ; et
- une couche interne d'absorption des chocs disposée du côté de la face interne de la plaque principale.

La première couche externe consiste en un matériau textile et est incrustée dans la face externe de la plaque principale de manière à créer, dans la face externe, une empreinte du matériau textile.

Selon d'autres caractéristiques optionnelles, prises seules ou en combinaison :
- La première couche externe peut être appliquée contre la face externe de la plaque principale par application sous pression et sous une température suffisante pour créer, dans la face externe, une empreinte du matériau textile.
- Le matériau textile de la première couche externe peut être un matériau tissé.
- Le matériau textile de la première couche externe peut être un tissu de fibres de verre.
- La première couche externe peut être recouverte, sur une face externe opposée à une face interne incrustée dans la face externe de la plaque principale, d'un film polymère.
- Le grammage du film polymère peut être inférieur à 250 grammes par mètre carré, de préférence inférieur ou égal à 150 grammes par mètre carré.
- Le film polymère peut être déposé par enduction.
- Le film polymère peut être un film préformé apposé avec adhésion sur la face externe de la première couche externe, notamment par contre-collage.
- Le matériau polymère thermoplastique de la plaque principale peut être thermo-formable à moins de 80°C.
- L'équipement est de préférence apte à être mis en forme mise en passant d'une première configuration géométrique stable de l'équipement, à une seconde configuration géométrique stable de l'équipement, distincte de la première, par chauffage au moyen d'eau chaude liquide uniquement, par application d'un effort de mise en forme puis par refroidissement. Dans ce cadre l'effort de mise en forme est de préférence apte à être appliqué manuellement.
- De préférence, l'équipement est apte à être mis en forme successivement plusieurs fois.
- Le matériau polymère thermoplastique de la plaque principale peut présenter une température de ramollissement Vicat, déterminée par la norme ISO 306 :2013, méthode B50 utilisant une charge de 50 N et une vitesse d'échauffement de 50 K/h, qui est inférieure à 80°C, de préférence inférieure à 70°C et plus préférentiellement inférieure à 65°C, mais de préférence supérieure à 45°C.
- Le matériau polymère thermoplastique de la plaque principale peut comporter un polyester de type polycaprolactone et/ou au moins un polymère comprenant des blocs macromoléculaires de type polycaprolactone.
- Le matériau polymère thermoplastique de la plaque principale peut comporter un polyuréthane thermoplastique comprenant des segments souples de type copolyester de polycaprolactone.
- La plaque principale peut présenter une épaisseur comprise entre 2 et 5 mm, de préférence comprise entre 2,5 et 4 mm.
- La couche interne d'absorption des chocs peut comporter une plaque de matériau polymère alvéolaire. Une plaque de matériaux alvéolaire peut comporter plusieurs couches de matériaux polymères alvéolaires, éventuellement de matériaux polymères alvéolaires différents, ayant des caractéristiques mécaniques différentes, Des matériaux intercalaires peuvent aussi être prévus.
- La plaque principale présente un bord périphérique et un biais peut être est rapporté à cheval sur le bord périphérique.
- Le biais peut être cousu par une couture qui traverse la plaque principale perpendiculairement à ses faces interne et externe.
- Le biais peut être une pièce moulée, notamment par injection plastique.

Diverses autres caractéristiques ressortent de la description faite ci-dessous en référence aux dessins annexés qui montrent, à titre d'exemples non limitatifs, des formes de réalisation de l'objet de l'invention.
La **Figure 1** illustre une vue de face d'un équipement de protection individuelle selon l'invention, illustré avant sa mise en forme.
Les **Figures 2 et 2A** illustre deux variantes de réalisation en vue en coupe transversale, partielle au niveau d'un bord, de l'équipement de la **Fig. 1****.**
La **Figure 3** illustre une vue schématique en coupe transversale éclatée des différents composants de l'équipement.
La **Figure 4** illustre une vue schématique en perspective de l'équipement de protection individuelle de la **Fig. 1****,** après sa mise en forme selon une géométrie non plane.

Un exemple préféré de réalisation de l'invention sera décrit ci-après dans le cadre de la réalisation d'un équipement de protection individuelle, ci-après dénommé équipement, de type protège-tibia destiné à être utilisé par un être humain dans la pratique d'un sport, par exemple le football.

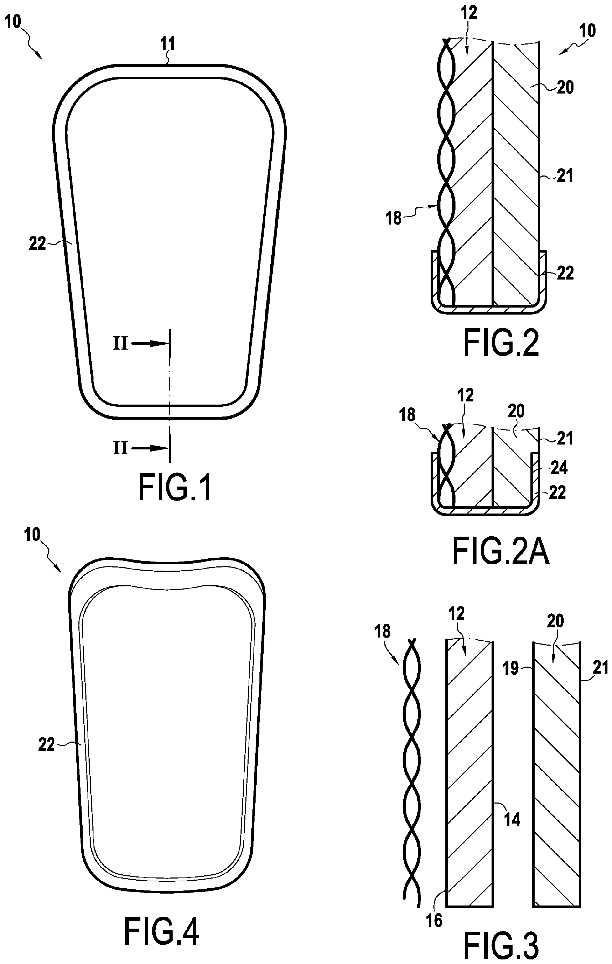

Dans l'exemple de réalisation, un équipement **10** est réalisé sous une forme initialement plane, illustrée à la **Fig. 1****,** et est destiné à être mis en forme par l'individu désirant utiliser cet équipement **10** pour lui conférer une géométrie non plane telle qu'illustrée à la **Fig. 4****.** Cette géométrie non plane est, pour un protège-tibia, conforme à la géométrie de la jambe d'un individu, notamment de la partie inférieure située au-dessus de la cheville, et en dessous du genou.

Sur la **Fig. 1****,** l'équipement **10** se présente donc sous la forme initiale, avant mise en forme, d'un élément sensiblement plan présentant un contour périphérique **11.**

La forme illustrée sur cette figure est une forme bien adaptée à la réalisation d'un protège-tibia, mais d'autres formes sont susceptibles d'être utilisées pour un équipement selon l'invention, y compris si celui-ci est destiné à former un protège-tibia. Dans le cas d'un protège-tibia, l'équipement peut présenter par exemple, pour une petite taille, une hauteur selon la direction d'extension du membre de 14 cm, et une largeur transversale maximale selon la direction perpendiculaire de 10 cm. Pour les plus grandes tailles, la hauteur peut atteindre 20 centimètres et la largeur peut atteindre 13 cm. Bien entendu, pour d'autres équipements de protection individuelle, des dimensions adaptées à la fonction seront prévues.

Comme on peut le voir sur les **Figs. 2** et **3****,** l'équipement **10** comporte pour l'essentiel une plaque principale **12,** qui présente deux faces opposées qui sont arbitrairement dénommées face interne et face externe. La face interne **14** est destinée à être tournée en direction du membre à protéger. La face externe **16** est destinée à être tournée à l'opposé du membre à protéger.

Comme cela sera décrit plus en détail plus loin, l'équipement **10** comporte par ailleurs une première couche externe **18** accolée à la face externe de la plaque principale **12,** et une couche interne d'absorption des chocs **20** qui est disposée du côté de la face interne de la plaque principale **12.**

La plaque principale **12** est réalisée en matériau polymère thermoplastique. Le matériau polymère thermoplastique désigne un matériau présentant une certaine rigidité pour une gamme de températures ambiantes, correspondant aux températures de l'atmosphère ambiante dans les conditions normales d'utilisation, cette gamme de températures ambiantes étant inférieure à la température de ramollissement Vicat du matériau. Le matériau polymère thermoplastique présente un état plastique malléable dans une plage de température intermédiaire de formage, supérieure à la température de ramollissement Vicat du matériau, ceci de manière réversible. Un tel matériau retrouve sa rigidité initiale lorsque le matériau est ramené dans la gamme de températures ambiantes, en-dessous de la température de ramollissement Vicat du matériau, mais peut de nouveau être amené, au moins une seconde fois, dans son état plastique malléable en étant amené de nouveau dans la plage de température intermédiaire de formage, au-dessus de la température de ramollissement Vicat du matériau.

Un tel matériau n'est donc pas thermiquement dégradé de manière significative lorsqu'il est amené dans la plage de température intermédiaire. Avec un tel matériau, les contraintes mécaniques de cisaillement introduites par un procédé de mise en forme ne modifient significativement pas la structure moléculaire du matériau lorsque la mise en forme est effectuée dans cette plage intermédiaire de formage.

Le matériau polymère thermoplastique de la plaque principale **12** est au moins semi-rigide, de préférence rigide, à température ambiante, notamment à 20°, et conserve ce caractère semi-rigide ou rigide de préférence au moins jusqu'à 40°C, plus préférentiellement au moins 45°C.

On considère qu'un matériau polymère est semi-rigide à une température donnée si son module d'élasticité en traction déterminé à cette température selon la norme ISO 527-1:2012 est supérieur à 70 MPa, et qu'il est rigide si son module d'élasticité en traction déterminé à cette température selon la norme ISO 527-1:2012 est supérieur à 700 MPa.

De par le caractère thermoplastique du matériau polymère qui la constitue, la plaque principale **12** peut être mise en forme par thermoformage. Cette mise en forme de la plaque principale correspond à une mise en forme de l'équipement **10.** Cette mise en forme de l'équipement **10** consiste au passage d'une première configuration géométrique stable de l'équipement **10,** à une seconde configuration géométrique stable de l'équipement **10,** distincte de la première. Une configuration géométrique stable de l'équipement **10** correspond à une forme géométrique que l'équipement **10** conserve dans le temps lorsqu'il n'est soumis à aucune contrainte extérieure. La première configuration géométrique stable l'équipement **10** est par exemple une configuration géométrique plane. La deuxième configuration géométrique stable est par exemple une configuration géométrique dans laquelle l'équipement **10** épouse la forme d'un partie d'un membre d'un individu, par exemple la forme de l'avant de la jambe d'un utilisateur. Le thermoformage correspond à une mise en forme au cours de laquelle l'élément à thermoformer est chauffé jusqu'à atteindre un état plastique malléable dans une plage de température intermédiaire de formage pour permettre sa mise en forme, puis refroidi pour que la mise en forme puisse se conserver dans le temps.

De manière avantageuse, le matériau polymère thermoplastique de la plaque principale **12** est choisi pour permettre le thermoformage de l'équipement **10** par un utilisateur, sans nécessiter d'outil spécifiquement dédié à cette mise en forme, notamment sans nécessiter de moule rigide. Pour cela, il est avantageux de choisir le matériau polymère thermoplastique de telle sorte qu'il permette la mise en forme par thermoformage de la plaque principale **12** sous une température inférieure à 80°C, par exemple comprise entre 50 et 80°C. On considère ici la température atteinte au cœur du matériau de la plaque principale **12.** Le matériau doit donc être malléable dans ces conditions.

Un tel choix permet notamment que, en vue du thermoformage, l'équipement **10** puisse être chauffé par un moyen très simple, à savoir par exemple de l'eau chaude liquide, par exemple de l'eau bouillante. De préférence, l'eau chaude liquide est le seul apport de chaleur utilisé pour la mise en forme de l'équipement **10.** L'utilisation de l'eau chaude liquide, notamment bouillante, est particulièrement simple car sa température est parfaitement maîtrisée sans qu'il soit nécessaire pour cela d'utiliser un dispositif de contrôle, même pas un thermomètre. Dans l'hypothèse de l'utilisation d'eau chaude liquide, notamment bouillante, pour le chauffage en vue du thermoformage, le fait de prévoir que le matériau soit thermoformable à une température inférieure à 80°C permet de prendre en compte l'inévitable refroidissement du matériau entre le moment où il est chauffé et le moment où il est mis en forme. En effet, le cas idéal est de permettre la mise en forme de l'équipement **10** directement au contact du membre de l'individu pour ainsi épouser au mieux la morphologie réelle du membre de l'individu. De plus, le choix d'une température de thermoformage inférieure à 80 °C permet de limiter les risques de brûlures.

Ainsi, l'équipement **10** est apte à être mis en forme mise en passant d'une première configuration géométrique stable de l'équipement **10,** à une seconde configuration géométrique stable de l'équipement **10,** distincte de la première, par chauffage au moyen d'eau chaude liquide uniquement, par application d'un effort de mise en forme puis par refroidissement.

Bien entendu, l'effort de mise en forme est apte à être appliqué manuellement. Cet effort de mise en forme peut être appliqué par l'intermédiaire d'un bandage ou d'une gaine appliqué(e) autour de l'équipement, ce dernier étant préalablement chauffé avec de l'eau chaude liquide et apposé contre le membre à protéger. Le bandage ou la gaine est par exemple appliqué manuellement. Le bandage ou la gaine permettent de maintenir l'effort de mise en forme pendant le refroidissement de l'équipement **10,** donc le refroidissement de la plaque principale **12,** le temps que la plaque principale **12,** et donc l'équipement **10,** se fige dans la configuration géométrique désirée, correspondant par exemple à celle du membre contre lequel il est apposé. Le bandage ou la gaine permettent aussi d'avoir une bonne répartition de l'effort de mise en forme sur toute la surface de l'équipement **10.**

Avantageusement, la plaque principale **12,** et donc l'équipement **10,** est apte à être mis en forme successivement plusieurs fois.

L'homme du métier est capable de trouver de nombreux matériaux commercialement disponibles susceptibles de former la plaque principale **12** afin de permettre ce thermoformage sous une température inférieure à 80°C. Cette contrainte induit que le matériau soit thermoplastique et présente une température de ramollissement Vicat inférieure à 80°C. Cette température de ramollissement Vicat, déterminée par la norme ISO 306:2013, méthode B50 utilisant une charge de 50 N et une vitesse d'échauffement de 50 K/h, est inférieure à 80°C, de préférence inférieure à 70°C et plus préférentiellement inférieure à 65°C, mais de préférence supérieure à 45° C.

Une première famille de matériaux susceptibles de convenir pour la réalisation de la plaque principale **12** comporte des matériaux polymères thermoplastiques comportant au moins un polyester de la famille des polycaprolactones et/ou au moins un polymère comprenant des blocs macromoléculaires de type polycaprolactone.

Notamment, les inventeurs ont déterminé que, parmi les matériaux polymères thermoplastiques susceptibles de permettre le thermoformage à une température inférieure à 80°C, figurent des polyuréthanes thermoplastique comportant des segments souples de type copolyester de polycaprolactone, tels que les matériaux commercialisés par Lubrizol Advanced Materials, Gran Vial, 17 08160 Montmeló, Espagne, sous la dénomination commerciale PEARLBOND®, notamment les grades 520 et 522.

Ce type de matériaux, comporte des segments souples comprenant des blocs macromoléculaires de type polycaprolactone, et des segments rigides, dans cet exemple comportant des liaisons uréthanes. La capacité de ces matériaux à être thermoformés est obtenue lorsque les segments souples atteignent leur température de fusion. Cependant, à cette température, les segments rigides conservent leurs caractéristiques. Ainsi, pour cette famille de matériaux, la température de ramollissement à laquelle le thermoformage peut être réalisé correspondra à une température de fusion des segments souples. Ces matériaux présentent généralement un fort taux de cristallinité, et ils présentent en revanche généralement une température de transition vitreuse très basse, par exemple inférieure à 0°, voire même inférieure.

D'autres matériaux présentant des propriétés similaires peuvent être utilisés, comme :
- le Desmomelt® 530, commercialisé par Bayer MaterialScience AG, D-51368 Leverkusen, Allemagne ;
- Biolight, commercialisé par Texon France SA, BP 226, 23 Rue De La Sarthe, 49302 Cholet, France.

Une seconde famille de matériaux susceptibles d'être utilisés pour former la plaque principale comporte des matériaux polymères amorphes ou très peu cristallins, thermoplastiques, pour lesquels la température de ramollissement correspond à une température de transition vitreuse qui doit donc être comprise dans la plage de température visée pour le thermoformage.

Pour permettre son thermoformage à une température inférieure à 80°C, le matériau polymère thermoplastique de la plaque principale **12,** appartenant à cette seconde famille de matériaux, présente de préférence une température de transition vitreuse strictement inférieure à 80°C, de préférence inférieure à 70°C. En pratique, on choisira de préférence des matériaux dont la température de transition vitreuse est inférieure à 65°C.

De préférence, dans cette famille de matériaux, le matériau polymère thermoplastique de la plaque principale 12 présente une température de transition vitreuse supérieure à 45°C pour présenter une bonne rigidité dans les conditions normales d'utilisation de l'équipement de protection individuelle.

La température de transition vitreuse sera de préférence mesurée par analyse calorimétrie différentielle (Differential scanning calorimetry - DSC) selon la norme ISO 11357-2 : 2013 avec une rampe de température de 10°C/min.

Parmi les matériaux de cette seconde famille qui peuvent être utilisés, on peut citer :
- SKYGREEN® PN200, qui est un matériau comonomère polyéthylène téréphtalate glycol (PETG), commercialisé par SK Chemicals Co., Ltd ; 686 Sampyung-Dong, Bundang-gu, Seongnam-si, Gyeonggi-do, Corée du Sud ;
- Asaflex™ 830 qui est un copolymère bloc styrène/butadiène (SBC) commercialisé par Asahi Kasei Corp 1-105 Kanda Jinbocho, Chiyoda-ku, Tokyo 101-8101, Japon.
- K-Resin® SBC, notamment grade XK40, comercialisé par Chevron Phillips Chemical Company LP, P.O. Box 4910, The Woodlands, TX 77387-4910, USA.

La plaque principale présente de préférence une épaisseur comprise entre 2 et 5 mm, ceci afin de conférer un niveau de résistance suffisant contre les chocs tout en conservant un encombrement et un poids satisfaisant pour l'individu qui est destiné à porter l'équipement. Plus préférentiellement, l'épaisseur de la plaque principale **12** peut être comprise entre 2,5 et 4 mm, notamment pour un matériau présentant des caractéristiques mécaniques égales à, ou proches de, celles du PEARLBOND® 522, avec comme exemple particulier une plaque principale **12** présentant une épaisseur de 3 mm.

La première couche externe **18** consiste en un matériau textile et est incrustée dans la face externe **16** de la plaque principale **12** de manière à créer, dans la face externe **16,** une empreinte du matériau textile.

Le matériau textile de la première couche externe **18** est ainsi incrusté, sur au moins une partie de son épaisseur, dans la face externe **16** de la plaque principale **12,** assurant ainsi un ancrage mécanique au moins partiel entre la première couche externe **18** et la plaque principale **12.** Cet ancrage mécanique participe de préférence à une adhésion entre la première couche externe **18** et la plaque principale **12.** Cet ancrage mécanique est particulièrement utile pour stabiliser l'interface entre la première couche externe **18** et la plaque principale **12** au moment du thermoformage de l'équipement de protection individuelle. Cet ancrage du matériau textile dans la face externe **16** de la plaque principale **12** permet aussi à la plaque principale **12** de conserver sa forme de découpe lors de la mise en forme par thermoformage par l'utilisateur final.

La première couche externe **18** n'est pas noyée dans la plaque principale **12,** et reste donc apparente.

L'incrustation de la première couche externe **18** permet une meilleure résistance à l'enfoncement, et retarde l'apparition de fracturations de la plaque principale **12.**

De préférence, la première couche externe **18** recouvre l'intégralité de la face externe **16** de la plaque principale **12.** De préférence, la première couche externe **18** est incrustée dans la face externe de la plaque principale **12** sur l'intégralité de la superficie de celle-ci.

Dans un mode de réalisation, la première couche externe **18** est accolée contre la face externe **16** de la plaque principale par application sous pression et sous une température supérieure à la température de ramollissement du matériau polymère thermoplastique de manière à créer, dans la face externe **16,** une empreinte du matériau textile de la première couche externe **18.**

La plaque principale **12** peut être obtenue par extrusion et/ou calandrage du matériau polymère thermoplastique. Dans ce cas, la première couche externe **18** peut être avantageusement accolée contre la face externe **16** de la plaque principale **12** en sortie d'extrusion par une opération de calandrage dans laquelle le matériau textile de la couche externe **18** est pressé contre la face externe **16** de la plaque principale **12** entre deux rouleaux contra-rotatifs, le matériau thermoplastique de la plaque principale **12** étant alors encore dans un état plastique malléable de manière à ce que la pression de calandrage provoque, sur la face externe **16,** la formation de l'empreinte du tissu.

De préférence, il est créé entre la première couche externe **18** et la plaque principale **12** une adhésion qui est aussi en partie assurée par une adhésion chimique. Préférentiellement, cette adhésion chimique est obtenue sans adjonction de colle entre la première couche externe **18** et la plaque principale **12.**

Dans l'exemple proposé, cette adhésion chimique est préférentiellement réalisée par les capacités adhésives du matériau polymère thermoplastique de la plaque principale **12** lorsque ce dernier est dans l'état plastique malléable au-dessus de sa température de ramollissement. Bien entendu, l'absence de colle n'empêche pas que les fibres du matériau textile constituant la première couche externe **18** soient traitées par ensimage pour assurer une compatibilité entre le matériau textile et le matériau polymère thermoplastique de la plaque principale **12.**

Pour la réalisation d'un élément de protection individuelle **10** selon l'invention, il est possible de créer au préalable une grande plaque de matériaux superposés, comportant une couche du matériau polymère thermoplastique et la première couche externe **18** en matériau textile incrusté dans une face de la couche de matériau polymère thermoplastique, et ensuite de découper, dans cette grande plaque de matériaux superposés, une forme suivant le contour **11** l'équipement de protection individuelle **10.** Ainsi, la plaque principale **12** et la première couche externe **18** présentent la même superficie et présentent des bords superposés.

On pourrait prévoir que le matériau textile de la première couche externe **18** soit un matériau textile non-tissé ou un matériau textile tricoté ou un matériau textile tridimensionnel. Toutefois, dans l'exemple de réalisation illustrée, le matériau textile de la première couche externe **18** est un matériau tissé. Un matériau tissé, autrement dit un tissu, présente généralement des fils de chaînes parallèles entre eux qui sont entrecroisés avec des fils de trame parallèles entre eux. Dans l'exemple illustré, les fils de trame et les fils de chaîne sont agencés à 90°.

L'armure du tissu utilisé peut reprendre tout type d'armure généralement utilisée pour les tissus, y compris l'armure toile, l'armure serge ou l'armure satin, ou un dérivé ou une combinaison de ces armures. Dans l'exemple illustré, le tissu de la première couche externe **18** présente une armure toile simple dans lequel un fil de chaîne passe alternativement dessus et dessous les fils de trame successifs, et inversement. Par exemple, un tissu sergé 2/2 peut être utilisé.

Dans l'exemple illustré, le tissu de la première couche externe **18** est un tissu de fibres de verre. Chaque fil de chaîne et de trame est donc constitué de fibres de verre. Cependant, d'autres matériaux pourraient être utilisés. Notamment, les fibres textiles utilisées pour la première couche externe **18** pourraient comprendre des fibres de carbone, d'aramide, de matériau polymère tel que le polyamide ou le polyester, voire des fibres de matériau naturel tel que le lin, le chanvre ou la soie. Des combinaisons entre ces différents types de fibres peuvent être envisagées.

Le tissu utilisé pour la première couche externe présente de préférence un grammage compris entre 70 g par mètre carré et 450 g par mètre carré. Par exemple, dans l'exemple illustré où le tissu est un tissu de fibre de verre, on peut choisir un tissu dont le grammage est 200 à 400 gramme par mètre carré, notamment de 300 g par mètre carré. Pour des tissus à base de fibres de carbone ou d'aramide, on pourra utiliser des grammages plus faibles, par exemple compris entre 70 et 250 grammes par mètre carré.

Dans un mode de réalisation préférentiel, la première couche externe **18** est accolée directement contre la face externe 16 de la plaque principale **12,** sans interposition d'un autre matériau.

De manière importante, et contrairement à une utilisation courante des tissus de fibre de verre, les fibres textiles la première couche externe **18** ne sont pas imprégnés d'une résine rigide qui formerait avec les fibres de verre un matériau composite rigide. Par résine rigide, on entend une résine présentant un module de Young en traction longitudinale supérieur à 700 MPa et un allongement maximal à la rupture inférieure à 5 %.

Toutefois, on pourra avantageusement prévoir de recouvrir la première couche externe **18** d'une couche protectrice directement apposée contre la face externe de la première couche externe **18.** Une telle couche protectrice peut par exemple comprendre un film polymère, déposé par exemple par enduction, et/ou un film préformé, de type membrane, apposé avec adhésion, avec ou sans adhésif rapporté, sur une face externe de la première couche externe **18.** Par exemple, on peut prévoir de déposer sur la face externe de la première couche externe **18** une enduction de polyuréthane. Une telle enduction peut par exemple être réalisée par enduction en phase aqueuse, notamment à la racle, ou par pulvérisation. L'enduction peut être réalisée en plongeant le textile dans un bain. L'enduction se fait des deux côtés, mais cela peut permettre une meilleure adhésion chimique, notamment s'il s'agit d'une enduction polyuréthane.

Le grammage de la couche protectrice externe peut par exemple être compris entre 30 g par mètre carré et 150 g par mètre carré.

La couche de protection est de préférence réalisée avec un matériau, notamment un matériau polymère, à faible caractéristique mécanique, présentant un module d'élasticité en traction longitudinale inférieur à 700 MPa, de préférence inférieur à 70 MPa, ceci afin de ne pas s'opposer à la mise en forme de l'équipement **10** par thermoformage. Elle peut par exemple être réalisée en matériau de type acrylique, polyéthylène ou polyuréthane.

De préférence, ce matériau de la couche protectrice sera un matériau ductile présentant un allongement à la rupture en traction supérieure ou égale à 40 %, de préférence supérieure à 100%, ceci afin de de pouvoir absorber sans rupture les déformations de l'équipement **10** lors de sa mise en forme par thermoformage. L'allongement à la rupture peut être déterminé dans les conditions définies par la norme ISO 1926 :2009.

De préférence, la couche protectrice, si elle est présente, recouvre l'intégralité de la première couche externe **18.**

De préférence, la première couche externe **18,** ou éventuellement la couche protectrice externe directement en contact avec la première couche externe **18,** constitue la face la plus externe de l'équipement de protection individuelle **10** dans son ensemble, au sens qu'elle constitue la face la plus externe de l'ensemble des éléments qui sont solidaires de manière permanente de la plaque principale **12.**

De préférence, la couche interne d'absorption des chocs **20** comporte une plaque de matériau polymère alvéolaire.

Ce matériau alvéolaire est de préférence une mousse à cellules fermées, pour limiter la rétention d'eau, tant au moment du thermoformage qu'en cours d'utilisation.

Ce matériau polymère alvéolaire est de préférence un matériau élastique, plus préférentiellement élastomérique. De préférence, un tel matériau présente une résilience par rebondissement d'une bille déterminée selon la norme ISO 8307:2007, supérieure à 20%, de préférence supérieure à 30%. A titre d'exemple, le matériau polymère alvéolaire peut-être un matériau alvéolaire à base d'éthylène-acétate de vinyle (EVA), par exemple un produit commercialisé par la société PRIMACEL, ZI DES BELLEVUES, 35 AV DU GROS CHENE, 95220 HERBLAY, France, sous la dénomination commerciale EVALASTIK®, notamment les grades 25, 30, 35, 40 ou 45.

La couche interne d'absorption des chocs **20,** peut être constituée de plusieurs couches de matériaux polymères alvéolaires superposées, notamment plusieurs couches de matériaux polymères alvéolaires ayant des propriétés mécaniques différentes. Les différentes couches sont alors de préférence assemblées pour former un complexe.

La couche interne d'absorption des chocs **20** peut présenter, au moins dans une portion centrale, une épaisseur comprise entre 3 et 8 mm.

La couche interne d'absorption des chocs **20** peut présenter un rainurage sur sa face interne **21,** et/ou des micro-perforations, en vue d'améliorer le confort en utilisation, notamment en améliorant le drainage de la transpiration et/ou en améliorant la ventilation. Un rainurage peut comporter une série de rainures parallèles aménagées dans la face interne **21.** Les rainures ont de préférence une faible profondeur, par exemple inférieure ou égale à 2 mm, voire inférieure ou égale à 1 mm, et de préférence une faible largeur, par exemple inférieure ou égale à 2 mm voire inférieure ou égale à 1 mm. Le rainurage peut être réalisé par enlèvement de matière, par exemple au laser. La couche interne d'absorption des chocs **20** peut être traitée avec un agent antimicrobien, notamment antibactérien.

De préférence, la couche interne d'absorption des chocs **20** recouvre l'intégralité de la face interne **14** de la plaque principale **12.** De préférence, la couche interne d'absorption des chocs **20** est collée, par sa face externe **19,** sur la face interne **14** de la plaque principale **12,** par exemple au moyen d'un film adhésif ou d'une colle, par exemple une colle néoprène. De préférence, le collage est effectué sur l'intégralité de la superficie de la face interne **14** de la plaque principale **12.** Dans certains modes de réalisation, la couche interne d'absorption des chocs **20** peut s'étendre en débord par rapport au bord périphérique de la plaque principale **12,** sur tout ou partie de celui-ci. Le débord de la couche interne d'absorption des chocs **20,** par rapport au bord périphérique de la plaque principale **12,** peut-être de quelques millimètres, notamment de 1 à 10 mm, par exemple entre 2 et 6 mm, pour atténuer d'éventuelles surpressions au niveau du bord périphérique de la plaque principale **12** au contact du membre lors de l'utilisation.

Dans certains modes de réalisation, tels que celui illustré, la couche interne d'absorption des chocs **20** constitue la face la plus interne de l'équipement de protection individuelle **10,** au sens qu'elle constitue la face la plus interne de l'ensemble des éléments qui sont solidaires de manière permanente de la plaque principale **12.** Toutefois, en variante, on peut prévoir de fixer, sur une face interne **21** de la couche interne d'absorption des chocs **20,** une couche d'interface interne (non représentée). Une telle couche d'interface interne aura de préférence une épaisseur limitée, par exemple inférieure à 1,5 mm. Elle pourra avoir une fonction de confort et/ou une fonction d'adhérence.

La plaque principale **12** présente un bord périphérique qui, comme dans l'exemple illustré à la **Fig. 2****,** peut coïncider avec le contour **11** de l'équipement **10.**

L'équipement selon l'invention peut avantageusement être pourvu d'un biais **22** qui est rapporté à cheval sur le bord périphérique. Ainsi, le biais **22** recouvre non seulement le chant de la plaque principale **12** mais aussi une partie périphérique des faces interne et externe **14, 16,** par exemple sur une distance comprise entre 5 et 15 millimètres vers l'intérieur à partir du contour **11.**

Le biais **22** peut être réalisé sous la forme d'une bande de matériau, initialement plane, repliée à cheval le long du bord périphérique de la plaque principale **12.** Une telle bande de matériau peut comprendre une bande de matériau textile, notamment tissée. La bande de matériau peut éventuellement comprendre, sur au moins une face externe, un revêtement présentant un coefficient d'adhérence plus important que celui du matériau textile sous-jacent, ceci afin notamment de favoriser une bonne tenue en place de l'équipement de protection individuelle **10** lors de son utilisation.

Le biais **22** peut être réalisé sous la forme d'un matériau polymère moulé, de préférence un matériau présentant un coefficient d'adhérence plus important que celui de la couche interne absorption des chocs **20,** ou recouvert d'un tel matériau. Un tel biais **22** peut être réalisé par exemple en matériau élastomère, comme par exemple en silicone, en polyuréthane, en styrène-butadiène, et/ou en SBS [poly(styrène-b-butadiène-b-styrène)], et/ou en SEBS [polystyrène-b-poly(éthylène-butylène)-b-polystyrène]. Un tel biais **22** peut être moulé, préalablement, à la forme du contour **11** de l'équipement de protection individuelle **10,** puis rapporté sur le contour **11** de l'équipement de protection individuelle **10.** Alternativement, il peut être moulé directement sur le contour **11** de l'équipement **10.**

Dans tous les cas, on peut prévoir que le biais **22** soit cousu par une couture traversante au travers de la plaque principale **12,** sur toute ou partie du bord périphérique de la plaque principale **12,** perpendiculairement à ses faces interne et externe. Dans les modes de réalisation dans lesquels la première couche externe **18** et la couche interne d'absorption des chocs **20** s'étendent toutes les deux sur l'intégralité de la superficie de la plaque principale **12,** ces trois éléments présentant donc des bords périphériques superposés, le biais **22** est de préférence rapporté à cheval sur les bords périphériques de ces trois éléments, comme visible notamment sur la **Fig. 2****.** Quel que soit le mode de fixation du biais **12,** par exemple par collage et/ou par couture et/ou par moulage, une telle disposition permettra non seulement de dissimuler le bord périphérique de ces éléments, mais aussi d'éviter tout risque de séparation entre la plaque principale **12** et, d'une part, la première couche externe **18** et, d'autre part, la couche interne d'absorption des chocs **20.**

A la **Fig. 2A****,** on a illustré la réalisation, dans le bord périphérique de la couche interne d'absorption des chocs **20,** d'un renfoncement **24** qui permet de loger la partie correspondante du biais **22,** ceci afin de limiter voir d'éviter que le bais ne viennent en surépaisseur par rapport à la face interne **21** de la couche interne d'absorption des chocs **20.** Au niveau du renfoncement **24,** la couche interne d'absorption des chocs **20** présente donc une épaisseur réduite. Un tel renfoncement **24** peut être réalisé par déformation locale de la matière ou par enlèvement de matière, par exemple par fraisage ou par ablation au laser.

L'équipement de protection **10** selon l'invention est dépourvu de tout élément qui, par sa raideur en flexion, s'opposerait à son thermoformage, notamment à la température de thermoformage inférieure à 80°C. Ainsi, l'élément de protection **10** est thermoformable, à la température de thermoformage inférieure à 80°C, dans son ensemble comprenant l'ensemble des éléments qui sont solidaires de manière permanente de la plaque principale **12.** Dans l'exemple illustré, l'équipement de protection **10** dans son ensemble est constitué de la plaque principale **12,** de la première couche externe **18,** de la couche interne de protection **20,** et, s'ils sont présents, de la couche protectrice externe et du biais **22.** On note par exemple que le tissu constituant, dans l'exemple de réalisation, la première couche externe **18** comporte des fibres de verre qui présentent un module de Young en traction élevé. Cependant, le grammage de ce tissu est tel que sa raideur intrinsèque est faible, et sa mise en œuvre, dans laquelle il n'est pas noyé dans une résine rigide, résulte en ce qu'il ne forme pas une structure raide qui s'opposerait au thermoformage de l'élément de protection **10** dans son ensemble.

L'invention propose donc un équipement de protection individuelle qui peut être mis en forme par l'utilisateur sans intervention d'un technicien spécialisé et sans outillage spécifiquement dédié à cette mise en forme, donc à un moindre coût.

L'invention n'est pas limitée aux exemples décrits et représentés car diverses modifications peuvent y être apportées sans sortir de son cadre qui est défini par les revendications.

## Revendications

1. Equipement de protection individuelle **(10)** destiné à protéger un membre d'un individu du type comportant :
- une plaque principale **(12)** de matériau polymère thermoplastique ayant deux faces opposées, respectivement externe **(16)** et interne **(14)** ;
- une première couche externe **(18)** accolée à la face externe **(16)** de la plaque principale **(12) ;**
- une couche interne d'absorption des chocs **(20)** disposée du côté de la face interne **(14)** de la plaque principale **(12)** ;
**caractérisé en ce que** :
la première couche externe **(18)** consiste en un matériau textile et est incrustée dans la face externe **(16)** de la plaque principale **(12)** de manière à créer, dans la face externe **(16),** une empreinte du matériau textile.

2. Equipement de protection individuelle selon la revendication **1, caractérisé en ce que** la première couche externe **(18)** est appliquée contre la face externe **(16)** de la plaque principale **(12)** par application sous pression et sous une température suffisante pour créer, dans la face externe **(16),** une empreinte du matériau textile.

3. Equipement de protection individuelle selon l'une des revendications **1** ou **2, caractérisé en ce que** le matériau textile de la première couche externe **(18)** est un matériau tissé.

4. Equipement de protection individuelle selon l'une quelconque des revendications précédentes, **caractérisé en ce que** le matériau textile de la première couche externe **(18)** est un tissu de fibres de verre.

5. Equipement de protection individuelle selon l'une quelconque des revendications précédentes, **caractérisé en ce que** la première couche externe **(18)** est recouverte, sur une face externe opposée à une face interne incrustée dans la face externe de la plaque principale, d'un film polymère.

6. Equipement de protection individuelle selon la revendication **5, caractérisé en ce que** le grammage du film polymère est inférieur à 250 grammes par mètre carré, de préférence inférieur ou égal à 150 grammes par mètre carré.

7. Equipement de protection individuelle selon l'une des revendications **5** ou **6, caractérisé en ce que** le film polymère est déposé par enduction.

8. Equipement de protection individuelle selon l'une des revendications **5** ou **6, caractérisé en ce que** le film polymère est un film préformé apposé avec adhésion sur la face externe **(16)** de la première couche externe **(18).**

9. Equipement de protection individuelle selon l'une quelconque des revendications précédentes, **caractérisé en ce que** le matériau polymère thermoplastique de la plaque principale **(12)** est thermoformable à moins de 80°C.

10. Equipement de protection individuelle selon l'une quelconque des revendications précédentes, **caractérisé en ce que** l'équipement **(10)** est apte à être mis en forme mise en passant d'une première configuration géométrique stable de l'équipement **(10),** à une seconde configuration géométrique stable de l'équipement **(10),** distincte de la première, par chauffage au moyen d'eau chaude liquide uniquement, par application d'un effort de mise en forme puis par refroidissement.

11. Equipement de protection individuelle selon l'une quelconque des revendications précédentes, **caractérisé en ce que** le matériau polymère thermoplastique de la plaque principale **(12)** présente une température de ramollissement Vicat, déterminée par la norme ISO 306 :2013, méthode B50 utilisant une charge de 50 N et une vitesse d'échauffement de 50 K/h, qui est inférieure à 80°C, de préférence inférieure à 70°C et plus préférentiellement inférieure à 65°C, mais de préférence supérieure à 45°C.

12. Equipement de protection individuelle selon l'une quelconque des revendications précédentes, **caractérisé en ce que** le matériau polymère thermoplastique de la plaque principale **(12)** comporte au moins un polyester de la famille des polycaprolactones et/ou au moins un polymère comprenant des blocs macromoléculaires de type polycaprolactone.

13. Equipement de protection individuelle selon l'une quelconque des revendications précédentes, **caractérisé en ce que** la plaque principale **(12)** présente une épaisseur comprise entre 2 et 5 mm, de préférence comprise entre 2,5 et 4 mm.

14. Equipement de protection individuelle selon l'une quelconque des revendications précédentes, **caractérisé en ce que** la plaque principale **(12)** présente un bord périphérique et **en ce qu'**un biais **(22)** est rapporté à cheval sur le bord périphérique.

15. Equipement de protection individuelle selon la revendication **14, caractérisé en ce que** le biais **(22)** est une pièce moulée.

## Patentansprüche

1. Persönliche Schutzausrüstung (10), die dazu bestimmt ist, ein Körperglied einer Person zu schützen, vom Typ, der beinhaltet:
- eine Hauptplatte (12) aus thermoplastischem Polymermaterial, die zwei entgegengesetzte Flächen, eine äußere (16) bzw. eine innere (14), aufweist,
- eine erste äußere Schicht (18), die an die äußere Fläche (16) der Hauptplatte (12) angefügt ist,
- eine innere Stoßaufnahmeschicht (20), die auf der Seite der inneren Fläche (14) der Hauptplatte (12) angeordnet ist,
**dadurch gekennzeichnet, dass**:
die erste äußere Schicht (18) aus einem Textilmaterial besteht und in der äußeren Fläche (16) der Hauptplatte (12) angesetzt ist, derart dass in der äußeren Fläche (16) ein Abdruck des Textilmaterials erzeugt wird.

2. Persönliche Schutzausrüstung nach Anspruch 1, **dadurch gekennzeichnet, dass** die erste äußere Schicht (18) gegen die äußere Fläche (16) der Hauptplatte (12) durch Auftragen unter Druck und unter einer Temperatur aufgetragen ist, die ausreichen, um in der äußeren Fläche (16) einen Abdruck des Textilmaterials zu erzeugen.

3. Persönliche Schutzausrüstung nach einem der Ansprüche 1 oder 2, **dadurch gekennzeichnet, dass** das Textilmaterial der ersten äußeren Schicht (18) ein gewobenes Material ist.

4. Persönliche Schutzausrüstung nach einem der vorhergehenden Ansprüche, **dadurch gekennzeichnet, dass** das Textilmaterial der ersten äußeren Schicht (18) ein Glasfasergewebe ist.

5. Persönliche Schutzausrüstung nach einem der vorhergehenden Ansprüche, **dadurch gekennzeichnet, dass** die erste äußere Schicht (18) auf einer äußeren Fläche, die einer in der äußeren Fläche der Hauptplatte angesetzten inneren Fläche entgegengesetzt ist, mit einem Polymerfilm bedeckt ist.

6. Persönliche Schutzausrüstung nach Anspruch 5, **dadurch gekennzeichnet, dass** das Flächengewicht des Polymerfilms kleiner als 250 Gramm pro Quadratmeter, vorzugsweise kleiner oder gleich 150 Gramm pro Quadratmeter ist.

7. Persönliche Schutzausrüstung nach einem der Ansprüche 5 oder 6, **dadurch gekennzeichnet, dass** der Polymerfilm durch Beschichten aufgebracht wird.

8. Persönliche Schutzausrüstung nach einem der Ansprüche 5 oder 6, **dadurch gekennzeichnet, dass** der Polymerfilm ein vorgeformter Film ist, der mit Haftung an der äußeren Fläche (16) der ersten äußeren Schicht (18) angebracht wird.

9. Persönliche Schutzausrüstung nach einem der vorhergehenden Ansprüche, **dadurch gekennzeichnet, dass** das thermoplastische Polymermaterial der Hauptplatte (12) bei weniger als 80 °C warmformbar ist.

10. Persönliche Schutzausrüstung nach einem der vorhergehenden Ansprüche, **dadurch gekennzeichnet, dass** die Ausrüstung (10) geeignet ist, durch den Übergang von einer ersten stabilen geometrischen Ausgestaltung der Ausrüstung (10) zu einer zweiten stabilen geometrischen Ausgestaltung der Ausrüstung (10), die sich von der ersten unterscheidet, durch Erwärmung einzig mittels flüssigen warmen Wassers, durch Anwendung einer Formgebungskraft und dann Abkühlung geformt zu werden.

11. Persönliche Schutzausrüstung nach einem der vorhergehenden Ansprüche, **dadurch gekennzeichnet, dass** das thermoplastische Polymermaterial der Hauptplatte (12) eine Erweichungstemperatur Vicat aufweist, die durch die Norm ISO 306:2013, Verfahren B50, unter Verwendung einer Last von 50 N und einer Erwärmungsgeschwindigkeit von 50 K/h bestimmt wurde, die unter 80 °C, vorzugsweise unter 70° und noch bevorzugter unter 65 °C, aber vorzugsweise über 45 °C liegt.

12. Persönliche Schutzausrüstung nach einem der vorhergehenden Ansprüche, **dadurch gekennzeichnet, dass** das thermoplastische Polymermaterial der Hauptplatte (12) mindestens ein Polyester aus der Familie der Polycaprolactone und/oder mindestens ein Polymer beinhaltet, das makromolekulare Blöcke vom Typ Polycaprolacton umfasst.

13. Persönliche Schutzausrüstung nach einem der vorhergehenden Ansprüche, **dadurch gekennzeichnet, dass** die Hauptplatte (12) eine Dicke aufweist, die zwischen 2 und 5 mm, vorzugsweise zwischen 2,5 und 4 mm liegt.

14. Persönliche Schutzausrüstung nach einem der vorhergehenden Ansprüche, **dadurch gekennzeichnet, dass** die Hauptplatte (12) einen umlaufenden Rand aufweist, und dadurch, dass eine Einfassung (22) hufeisenförmig auf dem umlaufenden Rand angesetzt ist.

15. Persönliche Schutzausrüstung nach Anspruch 14, **dadurch gekennzeichnet, dass** die Einfassung (22) ein Formteil ist.

## Claims

1. Personal protective equipment **(10)** intended to protect a limb of an individual, comprising:
- a main plate **(12)** of thermoplastic polymer material having two opposing faces, respectively an outer **(16)** and an inner **(14)** face;
- a first outer layer **(18)** placed next to the outer face **(16)** of the main plate **(12);**
- an inner shock-absorbing layer **(20)** arranged on the side of the inner face **(14)** of the main plate **(12);**
**characterized in that**:
the first outer layer **(18)** consists of a textile material and is inlaid in the outer face **(16)** of the main plate **(12)** so as to create, in the outer face **(16),** an impression of the textile material.

2. The personal protective equipment according to claim **1, characterized in that** the first outer layer **(18)** is applied against the outer face **(16)** of the main plate **(12)** by application under pressure and under a temperature sufficient to create an impression of the textile material in the outer face **(16).**

3. The personal protective equipment according to any one of claims **1** or **2, characterized in that** the textile material of the first outer layer **(18)** is a woven material.

4. The personal protective equipment according to any one of the preceding claims, **characterized in that** the textile material of the first outer layer **(18)** is a fiberglass fabric.

5. The personal protective equipment according to any one of the preceding claims, **characterized in that** the first outer layer **(18)** is covered, on an outer face opposite an inner face inlaid in the outer face of the main plate, with a polymer film.

6. The personal protective equipment according to claim **5, characterized in that** the grammage of the polymer film is less than 250 grams per square meter, preferably less than or equal to 150 grams per square meter.

7. The personal protective equipment according to any one of claims **5** or **6, characterized in that** the polymer film is deposited by coating.

8. The personal protective equipment according to any one of claims **5** or **6, characterized in that** the polymer film is a preformed film affixed with adhesion to the outer face **(16)** of the first outer layer **(18).**

9. The personal protective equipment according to any one of the preceding claims, **characterized in that** the thermoplastic polymer material of the main plate **(12)** is thermoformable at less than 80 °C.

10. The personal protective equipment according to any one of the preceding claims, **characterized in that** the equipment **(10)** is capable of being shaped by passing from a first stable geometric configuration of the equipment **(10),** to a second stable geometric configuration of the equipment **(10),** distinct from the first, by heating by means of liquid hot water only, by applying a shaping force then by cooling.

11. The personal protective equipment according to any one of the preceding claims, **characterized in that** the thermoplastic polymer material of the main plate **(12)** may have a Vicat softening temperature, determined by the standard ISO 306:2013, method B50 using a load of 50 N and a heating rate of 50 K/h, which is less than 80 °C, preferably less than 70 °C and more preferably less than 65 °C, but preferably greater than 45 °C.

12. The personal protective equipment according to any one of the preceding claims, **characterized in that** the thermoplastic polymer material of the main plate **(12)** comprises at least one polyester of the polycaprolactones family and/or at least one polymer including polycaprolactone type macromolecular blocks.

13. The personal protective equipment according to any one of the preceding claims, **characterized in that** the main plate **(12)** has a thickness of between 2 mm and 5 mm, preferably between 2.5 mm and 4 mm.

14. The personal protective equipment according to any one of the preceding claims, **characterized in that** the main plate **(12)** has a peripheral edge and **in that** a bias **(22)** is added astride the peripheral edge.

15. The personal protective equipment according to claim **14, characterized in that** the bias **(22)** is a molded part.
